# EUROPEAN PATENT APPLICATION

(11) **EP 4 776 490 A1**
(43) Date of publication of application: **15.07.2026**
(21) Application number: 25151551.6
(22) Date of filing: 13.01.2025
(51) Int. Cl.: H02K 11/40, F16C 19/52, F16C 19/54, F16C 33/32, F16C 41/00, H02K 5/173

(54) **ELECTRIC MOTOR ARRANGEMENT AND DRIVE SYSTEM COMPRISING SUCH AN ARRANGEMENT**

(71) Applicant: ZF Friedrichshafen AG, 88046 Friedrichshafen (DE)
(72) Inventor: Jaiswal, Shivam, 208012 Kanpur (IN); Konemilli, Bhanu Prakash, 533125 Rajahmundry (IN)
(74) Representative: WBH Wachenhausen Patentanwälte PartG mbB

(57) **Abstract**

The present disclosure relates to an electric motor arrangement comprising an electric motor (7) comprising a stator (9) and a rotor (10), a shaft (4), a first bearing (12), a second bearing (13) and a conducting element (14). The rotor (10) is mechanically operatively coupled to the shaft (4), the first bearing (12) and the second bearing (13) are mounted on the shaft (4), and the conducting element (14) is in electrical contact with the shaft (4). The first bearing (12) has a lower electrical conductivity than the second bearing (13) and the conducting element (14) has a higher electrical conductivity than the second bearing (13). The present disclosure further relates to a drive system (3) for a vehicle (1) comprising such an electric motor arrangement. The present disclosure further relates to a vehicle (1) comprising such an electric motor arrangement or such a drive system (3).

## Description

### Technical field

The present disclosure refers to an electric motor arrangement, a drive system for a vehicle, and a vehicle with such a drive system.

### Prior art

Electric motor arrangements for various drive systems comprising an electric motor are known. In some cases and configurations, such arrangements may exhibit undesirable or unintentional electric currents.

### Summary of the invention

The present disclosure relates in a first aspect to an electric motor arrangement comprising an electric motor comprising a stator and a rotor, a shaft, a first bearing, a second bearing and a conducting element. The stator and the rotor may be arranged concentrically to each other, for example around a common rotational axis. The stator may be arranged within the rotor. The rotor may be arranged within the stator. The first bearing and the second bearing may be configured to enable a relative rotation, for example a rotation of the shaft relative to a housing or relative to the stator. The conducting element may be an element configured to conduct electricity and additionally or alternatively to have a low electrical resistance. The rotor is mechanically operatively coupled to the shaft. If two elements are mechanically operatively connected, the elements are directly or indirectly coupled to each other so that a movement of one element causes a reaction of the other element. A mechanical operative connection can be established, for example, by frictional engagement or geometric fit. The mechanical operative connection can correspond to a meshing between corresponding gears of the two elements. Further elements, such as shafts, constant velocity joints and/or one or more gear sets, may be present between the elements. The shaft may be arranged concentrically to the electric motor, for example around a common rotational axis. The electric motor may be configured for directly or indirectly driving the shaft. The electric motor may receive electric energy from an energy storage, for example a battery, and convert it to rotational mechanical energy. The electric motor may transmit the rotational mechanical energy to the shaft.

The first bearing and the second bearing are mounted on the shaft. The shaft may pass through the electric motor, and the first and second bearing may be mounted on the shaft on opposite sides of the electric motor. The first and second bearings may support the shaft against a housing and additionally or alternatively enable a rotation relative to a housing. The conducting element is in electrical contact with the shaft. To be in electrical contact may mean that electrons may flow between the two elements in electrical contact. The conducting element may be in contact with a housing. The conducting element may electrically connect the shaft and the housing. The conducting element may conduct electricity, for example allow electric current to flow between the shaft and the housing. The conducting element may comprise microfibers. The conducting element may comprise a carbon brush.

The first bearing has a lower electrical conductivity than the second bearing, and the conducting element has a higher electrical conductivity than the second bearing. The first bearing may be an insulating bearing, for example provide an electrical insulation between the shaft and a further component, such as the housing. The first bearing may comprise electrically insulating materials. The first bearing may comprise electrically insulating elements, such as an insulating coating or shell. The first bearing may be electrically insulated such that no electrical discharges occur over the second bearing during normal operations of the electric motor. The first bearing may be electrically insulated such that fewer and additionally or alternatively weaker electrical discharges occur compared to a non-insulated bearing. The second bearing may comprise electrically conducting materials, such as those commonly used for bearings, for example metal. The conducting element may be arranged next to the second bearing, for example axially adjacent to the second bearing. The conducting element may provide a conducting path around the second bearing, such that electrical currents do not pass over the second bearing. For example, the conducting element may prevent electrical discharges from occurring over the second bearing.

The electric motor may be configured to be driven via pulse width modulation (PWM) and additionally or alternatively exhibit high switching frequencies. In an electric motor system without any electrical protection, this may result in an undesirable circulating current flowing through the drive system, for example flowing between the shaft of the electric motor and the housing. This circulating current may flow via bearings supporting the shaft against the housing, causing electrical damage. The electrical damage may occur within the bearings. An insulating bearing, such as the first bearing, may interrupt a conducting path such that the circulating current may be reduced or not arise in the first place. Additionally or alternatively, it may prevent an electric discharge from occurring within the bearing.

The first bearing may be particularly well adapted to prevent damage from circulating currents due to high switching frequencies, for example of the electric motor. The conducting element may be particularly well adapted to prevent damage from common mode currents. To prevent damage may comprise to reduce a damage. The first bearing and the conducting element may also prevent damage from other electrical currents, for example capacitive currents within the drive system. Common mode currents may also occur within the system, which may cause electrical discharges within the bearings, causing the damage described above. The conducting element may provide a path to ground for such currents that does not pass over bearings. For example, the conducting element may be arranged next to a bearing, enabling a flow bypassing said bearing.

The electric motor arrangement provided is configured to prevent a damage to the drive system due to electrical currents. The first bearing and the conducting element may be configured to prevent a damage to bearings of the drive system due to electrical currents. Electrical currents may cause damage through electric discharges, for example discharges within a bearing of the drive system. The electric discharges may cause fluting damage, pitting within the bearing, noise, reduced lifetime of the bearing and additionally or alternatively a reduced efficiency of the bearing. The first bearing and the conducting element may also reduce the need for maintenance, thereby lengthening maintenance intervals and additionally or alternatively reducing operating costs.

In an embodiment, the first bearing comprises a ceramic material. The ceramic material may exhibit a particularly low conductivity. The first bearing may be configured to exhibit a lower conductivity and additionally or alternatively a lower admittance than a comparable bearing that does not comprise a ceramic material. The ceramic material may be arranged within the first bearing to reduce conductivity through the bearing, for example from an inner race to an outer race. For example, the inner race and additionally or alternatively the outer race may comprise a ceramic material, for example a ceramic coating. The shaft, which is mechanically operatively connected with the electric motor, may experience particularly high circulating currents and additionally or alternatively common mode currents. By providing at least one of the bearings supporting this shaft as a bearing with a lower conductivity, a circuit for such currents to circulate may be interrupted, undesirable discharges prevented and damage to bearings reduced.

In an embodiment, the first bearing comprises rolling elements comprising a ceramic material. The first bearing may be a rolling-element bearing, for example a ball bearing or a roller bearing. The rolling elements may be substantially fully ceramic or may only in part be composed of ceramic material. Rolling elements comprising a ceramic material may be particularly wear resistant in addition to having a low conductivity.

In an embodiment, the rolling elements comprise a ceramic coating. The ceramic coating may be arranged on an inner metal core of the rolling elements. Other inner material compositions are also possible. The ceramic coating may be of a sufficient thickness to reduce the conductivity of the first bearing, reducing or preventing electrical discharges through the bearing. By providing the ceramic material as a coating, a particularly simple yet effective insulation may be provided.

In an embodiment, the first bearing comprises a ball bearing. The bearing balls of the ball bearing may comprise a ceramic coating. By providing the first bearing as a ball bearing, a contact surface area between the rolling elements and the races may be reduced, further minimizing conductivity of the overall insulating bearing.

In an embodiment, the conducting element comprises a grounding ring comprising microfibers. The grounding ring may exhibit a particularly high conductivity. The grounding ring may exhibit a conductivity higher than the first and the second bearing. For example, it may exhibit a conductivity higher than a bearing arranged next to it, for example the second bearing. The grounding ring may comprise a ring shape. The grounding ring may comprise a ring structure arranged at an outer circumference with microfibers arranged on this ring structure. The ring structure may be mechanically coupled to an element of the drive system, for example a housing. The microfibers may be arranged to point radially inwards towards a center of the grounding ring. Microfibers may comprise carbon, for example be carbon microfibers. The microfibers may comprise at least 10,000, for example at least 100,000, for example at least 500,000 individual fibers. The microfibers may be particularly wear resistant and comprise a particularly high conductivity. A comparable carbon brush may require spring forces to be applied to the brushes to maintain a contact. The microfibers described above do not require to be preloaded in such a way, increasing a lifetime of the grounding ring. By providing a high number of microfibers a particularly large contact surface area may be achieved, improving a conductivity of the grounding ring.

In an embodiment, the microfibers are in electrical contact with the shaft. The microfibers may be in mechanical contact with the shaft. The microfibers may be in contact with an entire circumference of the shaft, for example cover 360° of the shaft. The grounding ring may further comprise a ring structure, which may be in mechanical contact with a structure of the drive system. For example, the ring structure may be in mechanical contact and additionally or alternatively in electrical contact with the housing, which may provide a path to ground from the shaft. The grounding ring may thus provide a path to ground for electric currents, further improving protection against undesirable electrical discharges and electrical damage.

In an embodiment, the microfibers comprise carbon microfibers. Carbon microfibers may exhibit a particularly high conductivity, wear resistance and additionally or alternatively chemical resistance. By providing the microfibers as carbon microfibers, a lifetime and conductivity of the grounding ring may be improved.

In an embodiment, the conducting element electrically connects the shaft to ground. The shaft may experience a high degree of undesirable electric currents. By electrically connecting it to ground, these may be discharged safely, reducing or eliminating electrical damage to bearings and other elements of the drive system.

In an embodiment, the electric motor arrangement comprises a housing, wherein the housing is configured to be connected to ground. The housing may form a part of a housing of the electric motor and additionally or alternatively of a housing of a distribution gearing mechanically coupled to the electric motor. The housing may comprise a further housing element. The housing may comprise metal and be conductive. The housing may be connected to ground via an additional grounding system. By providing a housing that is configured to be connected to ground, electric charges may safely and reliably be conducted to ground without producing undesirable discharges within the electric motor arrangement. Thereby, an electrically safe and reliable system is enabled.

In an embodiment, the insulating element is installed via at least one of a press fit and a stop ring. The insulating element may be installed within a bore of the housing via the press fit. The insulating element may be held in place within the bore via a stop ring. If the insulating element comprises a grounding ring with a ring structure, it may be installed via its ring structure. By providing a mounting as described, a reliable mechanical attachment of the grounding ring is enabled within the drive system.

In an embodiment, the electric motor is arranged coaxially to and around the shaft. The first bearing is arranged on a first side of the electric motor and the second bearing and the conducting element are arranged on a second side of the electric motor opposite to the first side. The rotor of the electric motor may be non-rotatably fixed, for example permanently non-rotatable fixed to the shaft. A permanent non-rotatable connection is a connection in which the two elements are rigidly coupled together. The elements may be formed as separate elements connected to each other in a non-rotatable manner or integrally. A non-rotatable connection between two elements may also be established by a switching element, e.g. a clutch or a brake. The non-rotatable connection may be established when a switching element is actuated. The non-rotatable connection may be released when the switching element is no longer actuated. The electric motor, the shaft, the first bearing, the second bearing and additionally or alternatively the conducting element may be arranged concentrically around a common axis, for example the axis of rotation of the electric motor. The shaft passing through the electric motor may be supported by the bearings arranged on either side of the electric motor. The first bearing may be a floating bearing. The second bearing may be a fixed bearing. The bearing arranged at the side of the electric motor opposite to the distribution gearing is the insulating bearing. The insulating bearing may be a floating bearing.

By providing the shaft with the bearings and the conducting element in the arrangement described above, electric charges may be conducted away from the shaft on the first side and prevented from discharging on the second side. Thus, potential circulation of undesirable currents is inhibited, reducing or preventing electrical damage.

In a second aspect, the present disclosure relates to a drive system for a vehicle comprising an electric motor arrangement according to the first aspect. The respective advantages and further features can be taken from the description of the first aspect, wherein embodiments of the first aspect also form embodiments of the second aspect and vice versa. The drive system comprises a distribution gearing being configured to distribute a power of the shaft between a first output shaft and a second output shaft. Examples of the vehicle may include a car, a truck, a bus and a working vehicle. Examples for the working vehicle may include a tractor, a combine harvester, a communal vehicle like a street sweeping machine, an excavator, a grader and a loader. The vehicle may comprise a shiftable transmission disposed in a torque flow between the electrical motor and the distribution gearing. Each output shaft may be mechanically operatively connected to a drive element of the vehicle.

The distribution gearing may comprise a rotating element and a housing accommodating the rotating element. The distribution gearing may be configured for converting an input value into an output value. For example, the distribution gearing may be able to convert an input rotational speed into a lower or higher out rotational speed and an input torque into a higher or lower output torque. The distribution gearing may comprise one or more gear sets configured to convert torques and rotational speeds from one value to another. The gear set or sets may be formed as spur gears, planetary gears, bevel gears or other suitable gears. The rotating element may be an element of a gear set. For example, the distribution gearing may comprise a planetary gear set and the rotating element may be a sun gear, a planetary gear or a ring gear. The housing may be provided as one or several casings for enclosing stationary and/or rotational components of the distribution gearing. The housing may also be configured as a stationary member for providing support and for receiving forces and torques. The housing may comprise several detachable housing portions, with each housing portion accommodating and supporting different components. For example, the housing may comprise a housing portion for enclosing and rotatably supporting the rotating element. For example, the housing may comprise a separate housing portion for enclosing and rotatably supporting the electric motor. The two exemplary housing portions may be mounted to each other. One of the shafts is mechanically operatively connected with the electric motor. For example, an input shaft may be mechanically operatively connected with the electric motor. The shaft mechanically operatively connected with the electric motor may be configured to transmit a torque from the electric motor to the distribution gearing.

The second bearing may be arranged between the distribution gearing and the electric motor. The side of the second bearing may be referred to as the second side or as the drive side. The second bearing may experience higher forces from the distribution gearing and additionally or alternatively the electric motor than the insulating bearing. The second bearing arranged at the drive side may be a fixed bearing. The conducting element may be arranged on the second side. As the conducting element has a higher conductivity than the second bearing, it may provide a path for electric currents to ground that does not pass over the second bearing. The opposite side of the electric motor may be referred to as the first side or as the non-drive side. The first bearing arranged at the non-drive side may experience lower forces than the second bearing arranged at the drive side. The second bearing may also be an insulating bearing, for example may comprise ceramic material. The second bearing may be a steel bearing and have a substantially higher conductivity than the first bearing. The second bearing may be configured for higher mechanical loads than the insulating bearing.

By providing a drive system as described above, a system arrangement is enabled that prevents electrical discharges and may provide high mechanical performance. By providing the bearing experiencing smaller mechanical loads as an insulating bearing, circulating currents may be inhibited. By providing the bearing experiencing higher mechanical loads as a steel bearing, a high mechanical performance may be maintained.

In an embodiment, the distribution gearing comprises a first planetary gear set and a second planetary gear set. The first planetary gear set comprises a first element, a second element and a third element. The second planetary gear set comprises a first element, a second element and a third element. The input shaft is non-rotatably connected to the first element of the first planetary gear set. The second element of the first planetary gear set is non-rotatably connected to the first output shaft. The third element of the first planetary gear set is non-rotatably connected to the first element of the second planetary gear set. The second element of the second planetary gear set is non-rotatably connected to a stationary member, such as the housing. The third element of the second planetary gear set is non-rotatably connected to the second output shaft.

The first, second and third elements may each be a sun gear, a planetary carrier or a ring gear of the respective planetary gear set. The respective planetary gear set may be a plus or a minus planetary gear set. Each of the planetary gear sets may have planetary gears that may be rotatably mounted on the respective planetary carrier of the one planetary gear set. The planetary gears may mesh with both the sun gear and the ring gear of the respective planetary gear set.

With the configuration of the gearing according to the present embodiment, a power distribution function for distributing power between the output shaft and the further output shaft is provided with a simple and compact configuration. In an alternative embodiment, the further output shaft is omitted and the third element of the second planetary gear set is non-rotatably connected to the second element of the first planetary gear set instead of the further output shaft. Thereby, a distribution gearing with a particularly high transmission ratio is provided.

In a third aspect, the present disclosure relates to a vehicle. The vehicle comprises an electric motor arrangement according to the first aspect or a drive system according to the second aspect. The respective advantages and further features can be taken from the description of the first and additionally or alternatively the second aspect. Embodiments of the first and additionally or alternatively the second aspect also form embodiments of the third aspect and vice versa.

### Brief description of drawings

Figure 1 shows a vehicle with a drive system comprising an electric motor arrangement according to an embodiment of the present disclosure.
Figure 2 schematically shows a general layout of the drive system of the vehicle of Figure 1.
Figure 3 schematically shows an exemplary electrical motor arrangement without an electrical protection device.
Figure 4 schematically shows the electrical motor arrangement shown in Figure 2 with electrical protection devices according to an embodiment.
Figure 5 schematically shows the grounding ring shown in Figure 4.

### Detailed description of embodiments

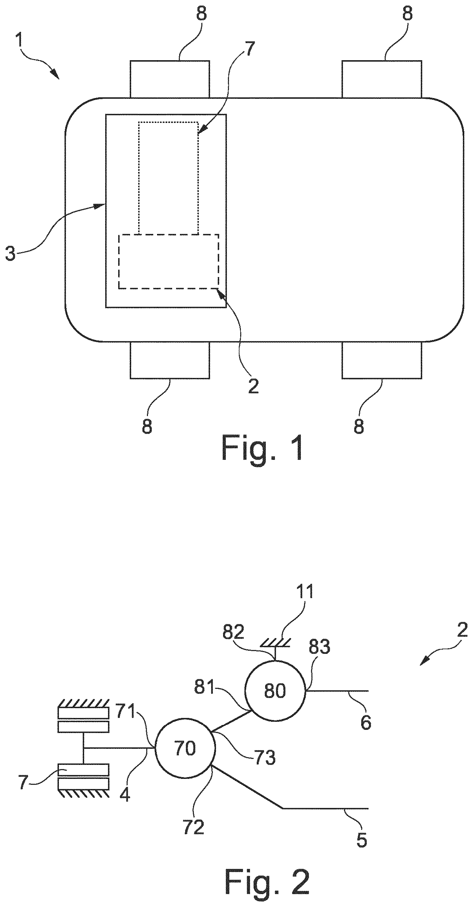

Figure 1 shows a vehicle 1 with a drive system 3 with an electric motor arrangement according to an embodiment of the present disclosure. The drive system 3 comprises a distribution gearing 2 and an electric motor 7. The distribution gearing 2 is driven by the electric motor 7 and is configured for distributing power input by the electric motor 7 to at least two drive elements 8. In the present embodiment, the drive elements 8 are wheels of the vehicle 1.

Figure 2 schematically shows a general layout of the distribution gearing 2 according to an embodiment of the present disclosure. The distribution gearing 2 is a distribution gearing with two planetary gear sets. As can be seen from Figure 2, the distribution gearing 2 comprises a first planetary gear set 70 having a first element 71, a second element 72 and a third element 73. Furthermore, the distribution gearing 2 comprises a second planetary gear set 80 having a first element 81, a second element 82 and a third element 83. A power of the electric motor 7 can be introduced into the distribution gearing 2 via the first element 71 of the first planetary gear set 70. For this purpose, an input shaft 4 driven by the electric motor 7 is mechanically operatively connected to the first element 71 of the first planetary gear set 70, here permanently non-rotatably connected. The third element 73 of the first planetary gear set 70 is permanently non-rotatably connected to the first element 81 of the second planetary gear set 80, here being integrally formed. The second element 82 of the second planetary gear set 80 is permanently non-rotatably fixed to a stationary member, here a housing 11. A first output shaft 5 is mechanically operatively connected to the second element 72 of the first planetary gear set 70, in this case permanently non-rotatably connected. A second output shaft 6 is mechanically operatively connected to the third element 83 of the second planetary gear set 80, in this case permanently non-rotatably connected.

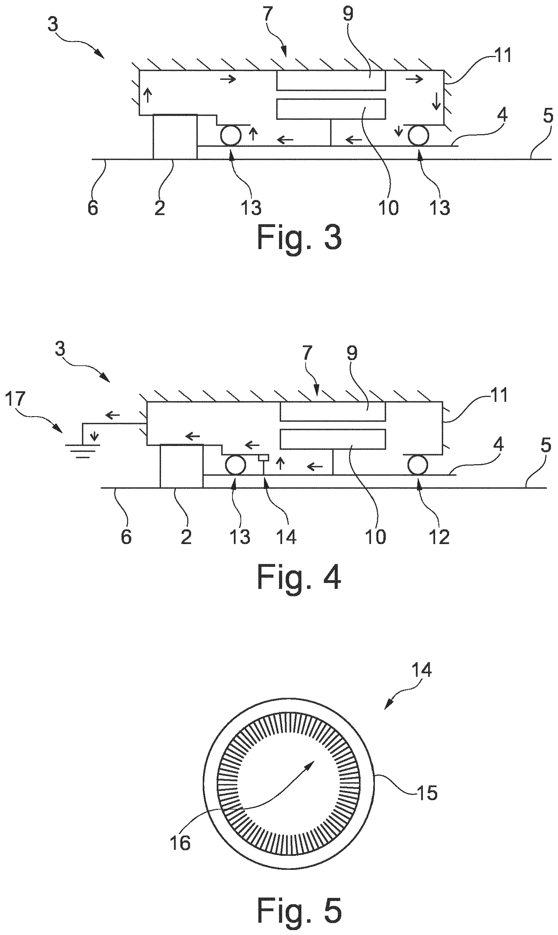

Figure 2 illustrates a schematic layout of the distribution gearing 2 and does not describe the spatial layout of its components. The first element 71 of the first planetary gear set 70 comprises a sun gear, while the second element 72 comprises a planet carrier coupled with the planets of the first planetary gear set 70. The third element 73 is integrally formed with the first element 81 of the second planetary gear set 80, forming a ring-sun-gear. The second planetary gear set 80 is arranged concentrically around the first planetary gear set 70. The second element 82 forms the planet carrier and the third element 83 forms the ring gear of the second planetary gear set 80. The input shaft 4 is arranged concentrically around the first output shaft 5 and concentrically within the electric motor 7, as is shown schematically in Figure 4. The input shaft 4 and the first output shaft 5 are arranged concentric to and on a side of the distribution gearing 2 opposite to the second output shaft 6.

Figure 3 schematically shows an exemplary drive system 3 without an electrical protection device. Electrical protection devices may be provided by an insulating bearing and additionally or alternatively by the grounding ring described in relation to Figure 4. Only an upper half of the drive system 3 is shown. The distribution gearing 2, which corresponds to the distribution gearing shown in Figure 2, is arranged concentrically and to the left of the electric motor 7. Both are arranged within a housing 11. The electric motor 7 comprises a stator 9 and a rotor 10. The stator 9 is fixed to the housing 11. The rotor 10 is permanently non-rotatably connected to the input shaft 4, which passes through the rotor 10 and is mechanically operatively connected to the distribution gearing 2. The distribution gearing 2 is configured to distribute the power introduced via the input shaft 4 to the output shafts 5 and 6.

The input shaft 4 is supported against the housing 11 via two bearings, which are electric conducting bearings 13 in the example shown in Figure 3. The two conducting bearings 13 are arranged on either side of the electric motor 7. The electric motor 7 is an AC motor driven via PWM, specifically driven by a variable frequency drive (VFD). Due to high switching frequencies, this arrangement may capacitively induce a voltage in the input shaft 4, such as a common mode voltage. This results in an undesirable circulating current flowing through the drive system 3. As indicated schematically by the arrows in Figure 3, said circulating current flows between the input shaft 4 and the housing via the conducting bearings 13. This circulating current may cause electrical discharges to occur within the conducting bearings 13, causing pitting and fluting damage. A common mode current may also flow within the drive system 3, further causing damage through electric discharges.

Figure 4 schematically shows the drive system 3 shown in Figure 2 with electrical protection devices according to an embodiment. Apart from the differences described here, the drive system 3 is identical to the one shown in Figure 3. The conducting bearing 13 shown on the right is replaced by an insulating bearing 12, which provides a first electrical protection device and a first bearing according to the present disclosure. The insulating bearing 12 is a ball bearing, wherein the bearing balls comprise a ceramic coating to reduce an electrical conductivity of the insulating bearing 12. Thus, the insulating bearing 12 provides an electric insulation between input shaft 4 and the housing 11 and inhibits the circulating current described above from flowing through the insulating bearing 12.

The conducting bearing 13 shown on the left provides a second bearing according to the present disclosure. A grounding ring 14 provides a second electrical protection device and a conducting element according to the present disclosure. The grounding ring 14 is arranged next to the conducting bearing 13 shown on the left in Figure 4. The grounding ring 14 is mounted via a press fit within the housing 11. The conducting bearing 13 electrically connects the input shaft 4 to the housing 11, which is in turn connected to ground 17, indicated schematically by the grounding symbol in Figure 4. The grounding ring 14 has a higher electrical conductivity than the conducting bearing 13 and thus provides a path for a current that bypasses the conducting bearing 13. It therefore reduces or eliminates electrical discharges and corresponding damage to the bearings, in particular to the conducting bearing 13. For example, it prevents the common mode current described above from discharging through the conducting bearing 13. In the present embodiment, the path via the grounding ring 14 is the path of least impedance between the input shaft 4 and ground 17, implying that any current flows via the grounding ring 14 and not via the conducting bearing 13. The conducting bearing 13 is provided as a fixed bearing, i.e. able to provide some axial support, and supports the input shaft 4 against the housing 11. The insulating bearing 12 is provided as a floating bearing, i.e. is able to provide some axial play along its rotational axis, and supports the input shaft 4 against the housing 11. The side of the conducting bearing 13 may be referred to as the drive side or second side. The side of the insulating bearing 12, that is the side of the electric motor opposite to the drive side along a rotational axis of the electric motor, may be referred to as the non-drive side or first side.

Figure 5 schematically shows details of the grounding ring shown in Figure 4. The grounding ring 14 comprises a ring structure 15, which is electrically conductive and via which the grounding ring 14 is mounted to the housing 11 via a press fit. The grounding ring 14 also comprises carbon microfibers 16, which are attached at one end to the ring structure 15 and which extend radially inwards towards a center of the ring structure 15. The grounding ring 14 is arranged coaxially to the input shaft 4 in Figure 4. The free ends of the microfibers 16 are in contact with the input shaft 4, electrically connecting the input shaft 4 to ground 17. The grounding ring 14 comprises hundreds of thousands of microfibers 16, which provide a large contact area with the input shaft 4. The microfibers 16 contact the entire circumference of the input shaft 4, extending along 360 degrees of the input shaft. The microfibers 16 are particularly wear resistant and require less maintenance than a comparable carbon brush.

### Reference signs

- 1: vehicle
- 2: distribution gearing
- 3: drive system
- 4: input shaft
- 5, 6: output shaft
- 7: electric motor
- 8: drive element
- 9: stator
- 10: rotor
- 11: housing
- 12: insulating bearing
- 13: conducting bearing
- 14: grounding ring
- 15: ring structure
- 16: microfibers
- 17: ground
- 70: first planetary gear set
- 71: first element
- 72: second element
- 73: third element
- 80: second planetary gear set
- 81: first element
- 82: second element
- 83: third element

## Claims

1. An electric motor arrangement comprising an electric motor (7) comprising a stator (9) and a rotor (10), a shaft (4), a first bearing (12), a second bearing (13) and a conducting element (14), wherein the rotor (10) is mechanically operatively coupled to the shaft (4), the first bearing (12) and the second bearing (13) are mounted on the shaft (4), and the conducting element (14) is in electrical contact with the shaft (4), wherein the first bearing (12) has a lower electrical conductivity than the second bearing (13) and the conducting element (14) has a higher electrical conductivity than the second bearing (13).

2. The electric motor arrangement according to claim 1, **characterized in that** the first bearing (12) comprises a ceramic material.

3. The electric motor arrangement according to claim 2, **characterized in that** the first bearing (12) comprises rolling elements comprising a ceramic material.

4. The electric motor arrangement according to claim 3, **characterized in that** the rolling elements comprise a ceramic coating.

5. The electric motor arrangement according to one of the claims 2-4, **characterized in that** the first bearing (12) comprises a ball bearing.

6. The electric motor arrangement according to one of the preceding claims, **characterized in that** the conducting element (14) comprises a grounding ring (14) comprising microfibers (16).

7. The electric motor arrangement according to claim 6, **characterized in that** the microfibers (16) are in electrical contact with the shaft (4).

8. The electric motor arrangement according to claim 6 or 7, **characterized in that** the microfibers (16) comprise carbon microfibers.

9. The electric motor arrangement according to one of the preceding claims, **characterized in that** the conducting element (14) is configured to electrically connect the shaft (4) to ground (17).

10. The electric motor arrangement according to one of the preceding claims, **characterized in that** the motor arrangement comprises a housing (11), wherein the housing (11) is configured to connect to ground (17).

11. The electric motor arrangement according to claim 10, **characterized in that** the conducting element (14) is within the housing (11) via at least one of a press fit and a stop ring.

12. The electric motor arrangement according to one of the preceding claims, **characterized in that** the electric motor (7) is arranged coaxially to the shaft (4), the first bearing (12) is arranged on a first side of the electric motor (7), and the second bearing (13) and the conducting element (14) are arranged on a second side of the electric motor (7) opposite to the first side.

13. A drive system (3) for a vehicle (1) comprising an electric motor arrangement according to one of the preceding claims and a distribution gearing (2), the distribution gearing (2) being configured to distribute a power of the shaft (4) between a first output shaft (5) and a second output shaft (6).

14. A drive system (3) according to claim 13, **characterized in that** the distribution gearing (2) comprises a first planetary gear set (70) and a second planetary gear set (80), wherein the first planetary gear set (70) comprises at least a first element (71), a second element (72) and a third element (73) and the second planetary gear set (80) comprises at least a first element (81), a second element (82) and a third element (83), wherein the shaft (4) is non-rotatably connected to the first element (71) of the first planetary gear set (70), the second element (72) of the first planetary gear set (70) is non-rotatably connected to the first output shaft (5), the third element (73) of the first planetary gear set (70) is non-rotatably connected to the first element (81) of the second planetary gear set (80), the second element (82) of the second planetary gear set (80) is non-rotatably connected to a stationary member (11), and the third element (83) of the second planetary gear set (80) is non-rotatably connected to the second output shaft (6).

15. A vehicle (1) comprising an electric motor arrangement according to one of claims 1 to 12 or a drive system (3) according to one of claims 13 to 14.
